# EUROPÄISCHE PATENTSCHRIFT

(11) **EP 3 628 387 B1**
(45) Veröffentlichungstag und Bekanntmachung des Hinweises auf die Patenterteilung: **07.09.2022**
(21) Anmeldenummer: 19188245.5
(22) Anmeldetag: 25.07.2019
(51) Int. Cl.: B01D 25/26, B01D 29/41

(54) **FILTERANLAGE**
FILTER INSTALLATION
INSTALLATION DE FILTRE

(30) Priorität: 05.09.2018 DE 102018215048
(43) Veröffentlichungstag der Anmeldung: 01.04.2020
(73) Patentinhaber: S + M Mack GmbH, 74532 Ilshofen (DE)
(72) Erfinder: Mack, Peter, 74532 Ilshofen-Eckartshausen (DE)
(74) Vertreter: Dr. Weitzel & Partner

(56) Entgegenhaltungen:
- GB-A- 692 565
- GB-A- 815 931
- US-A- 2 583 963
- US-A- 2 687 217

## Beschreibung

Die Erfindung betrifft eine Filteranlage zum Filtrieren von Medien jeglicher Art, insbesondere von Flüssigkeiten. Eine solche Filteranlage lässt sich in jeglichen Bereichen anwenden. Im industriellen Bereich kommt die Anwendung für Wasser, Abwasser, Öle, Chemikalien in Betracht, und im Lebensmittelbereich für Säfte wie Fruchtsäfte. Aus dem Stande der Technik sind die folgenden Druckschriften bekannt: US 2 687 217; GB 692 565; US 2 583 963. Hierbei wird jeweils ein zentraler Spannstab mit axialer Ausrichtung zur Filterplatte verwendet. Der Spannstab ist jedoch nur für ganz bestimmte Filtereinsätze verwendbar. Er schränkt bei Plattenfiltereinsätzen den Volumenstrom ein.

Bekannte Filteranlagen umfassen je nach Anwendungsfall z.B. einen Plattenfiltereinsatz, der durch eine Mehrzahl von Filterplatten, die aufeinandergestapelt sind gekennzeichnet ist oder Filtereinsätze, die z.B. mit Filterkerzen Filterbeuteln oder Adsorbermaterial ausgerüstet werden können. Im Falle eines Plattenfiltereinsatzes befindet sich zwischen zwei einander benachbarten Filterplatten ein poröses flächiges ringförmiges Filterelement, im Allgemeinen aus einem Faserprodukt wie Zellulose. Das zu filtrierende Medium enthält Partikel, die heraus zu filtrieren sind, wie beispielweise Verunreinigungen eines Abwassers. Die Partikel werden von den Filterelementen zurückgehalten. Die Poren der Filterelemente setzen sich entweder mehr und mehr zu oder das gegebene Schmutzfrachtvolumen zwischen den Filterplatten wird soweit befüllt, sodass die Filterelemente nach einer gewissen Zeit ausgetauscht werden müssen.

Ganz allgemein soll eine Filteranlage die folgenden Eigenschaften aufweisen:
- hoher Durchsatz
- hohe Trennschärfe
- lange Standzeit
- Filtration
- Absorption über angeschwemmtes Medium wie Kieselgur, Aktivkohle, Cellulose innerhalb des Schmutzfrachtvolumens
- Leichtes auswechseln der Filterelemente

Bei bekannten Filteranlagen werden diese Anforderungen nicht oder nur unzureichend erreicht.

Die Filtereinrichtung einer solchen Filteranlage umfasst ein zylindrisches Gehäuse, das einen Filtereinsatz beliebiger Bauform aufnimmt. Im Falle eines Plattenfiltereinsatzes besteht das Filterplattenpaket aus einer Vielzahl von Filterplatten. Die einzelne Filterplatte ist im Allgemeinen kreisrund. Zwischen zwei einander benachbarten Filterplatten befindet sich im Allgemeinen ein poröses flächiges ringförmiges Filterelement.

Es werden mehrere Filterplatten mit dazwischen befindlichen Filterelementen aufeinandergestapelt, sodass sich ein Filterpaket ergibt. Das Filterpaket wird in ein Filtergehäuse eingesetzt. Bei kreisrunden Filterplatten hat das Filterpaket zylindrische Gestalt. Demgemäß ist auch das Gehäuse zylindrisch. Die Umfangsfläche des Filterpaketes liegt an der Innenfläche des Gehäuses mehr oder minder an. Der Ringspalt zwischen der Umfangsfläche des Plattenfilterpakets und dem Gehäuse dient der Anströmung für die Filterplatten von außen nach innen.

Bedingt durch die Betriebsparameter der Förderpumpe und das Zusammenspiel der geforderten Umwälzrate sowie durch Strömungswiderstände entsteht ein Differenzdruck, der über den geforderten Temperaturbereich hermetisch abgedichtet werden muss.

Wichtig ist der folgende Aspekt:
Das Filterplattenpaket wird während des Filtrationsprozesses in axialer Richtung zusammengedrückt. Das Zusammendrücken ist notwendig und wichtig. Es sorgt dafür, dass die Filterpakete abgedichtet werden und dass die oberen Filterplatten während der Inbetriebnahme und während des Filtrationsprozesses nicht aufschwimmen, das heißt sich voneinander lösen, wobei die obere Filterplatte zum Gehäusedeckel hin gespült wird. Ein Zusammenpressen der Filterplatten eines Paketes ist somit notwendig. Dabei muss der Anpressvorgang individuell durchführbar sein.

Während einer Unterbrechung des Filtrationsprozesses kann die Spannung der Spann- und Stützvorrichtung ggf. auch nachjustiert werden, um dem Ausweichen des Filtermediums an den Dichtflächen entgegenzuwirken. Hingegen benötigt man bei bekannten Filteranlagen Filtervorrichtungen, bei denen stets ein und derselbe Pressdruck aufgebracht wird. Dies kann im Betrieb zu Undichtigkeiten führen, die den Filtrationsprozess einschränken können oder zu Beschädigungen an den Filterelementen führen können.

Der Erfindung liegt die Aufgabe zugrunde, eine Filtervorrichtung zu schaffen, umfassend Filterplatten mit dazwischen befindlichen Filterelementen, bei denen Vorkehrungen getroffen sind, um ein axiales Zusammenpressen des Filterplattenpaketes zu ermöglichen, wobei der Vorgang des Zusammenpressens individuell durchführbar sein muss, und die Presskraft leicht und ohne großen Aufwand hergestellt werden kann.

Diese Aufgabe durch die Merkmale von Anspruch 1 gelöst.

Der Vorgang des Zusammenpressens lässt sich somit individuell durchführen.

Weiterhin lassen sich beliebige Filtereinsätze durch die erfindungsgemäß Spann- und Stützvorrichtung auf einfache Weise in ihrer Position fixieren. Dies gilt z.B. für Kerzen-, Beutelfilter- oder Adsorbereinsätze. Im Grunde sind diese Filtereinsätze jedes handelsübliche Filtermedium denkbar. Die Spann- und Stützvorrichtung sorgt hier für die Fixierung des Filtereinsatzes und stellt so die richtige Positionierung des Einsatzes mit seinem Dichtsitz am Filtergehäuseboden sicher.

Weiterhin dient bei der Erfindung die Spann- und Stützvorrichtung Spann- und Stützvorrichtung der Aufnahme von Spannungen durch unterschiedliche Wärmeausdehnungen von Filtereinsatz und Filtergehäuse. Der horizontale Spannstab kann die unterschiedlichen Ausdehnungen aufgrund von unterschiedlichen Temperaturen in gewissen Grenzen kompensieren und leistet so eine wichtige Funktion für die Betriebssicherheit des Filtergerätes, bestehend aus Filtergehäuse und Filtereinsatz.

Außerdem wird das Filterpaket unabhängig vom Filtergehäusedeckel gespannt und sorgt so Undichtigkeiten oder Überbeanspruchung der Deckelstruktur vor.

Die Erfindung ist anhand der Zeichnung näher erläutert. Darin ist im Einzelnen folgendes dargestellt:
- Figur 1: zeigt eine Filteranlage in einer perspektivischen Darstellung;
- Figur 2: zeigt eine Filteranlage gemäß Figur 1 mit einer gespannten Spann- und Stützvorrichtung;
- Figur 3: eine Schnittdarstellung einer Spann- und Stützeinrichtung;
- Figur 4: die Spann- und Stützeinrichtung in gelöstem Zustand als perspektivische Darstellung;
- Figur 5: Spann- und Stützeinrichtung gemäß Figur 4 in gespannten Zustand;
- Figur 6: eine Schnittdarstellung einer alternativen Ausführungsform; wobei mehrere Spannschrauben (4.6) möglich sind

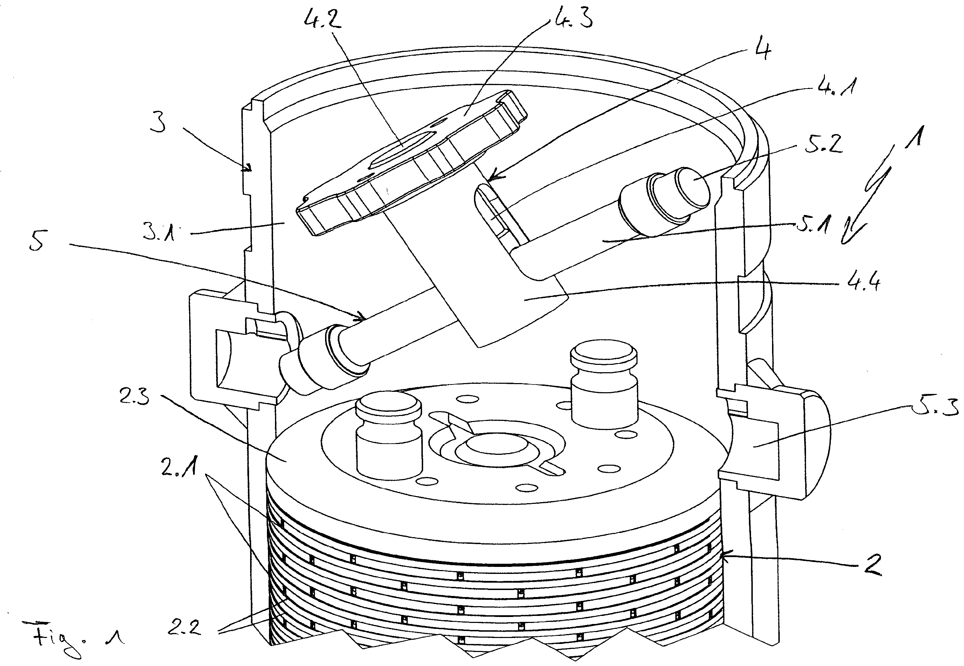

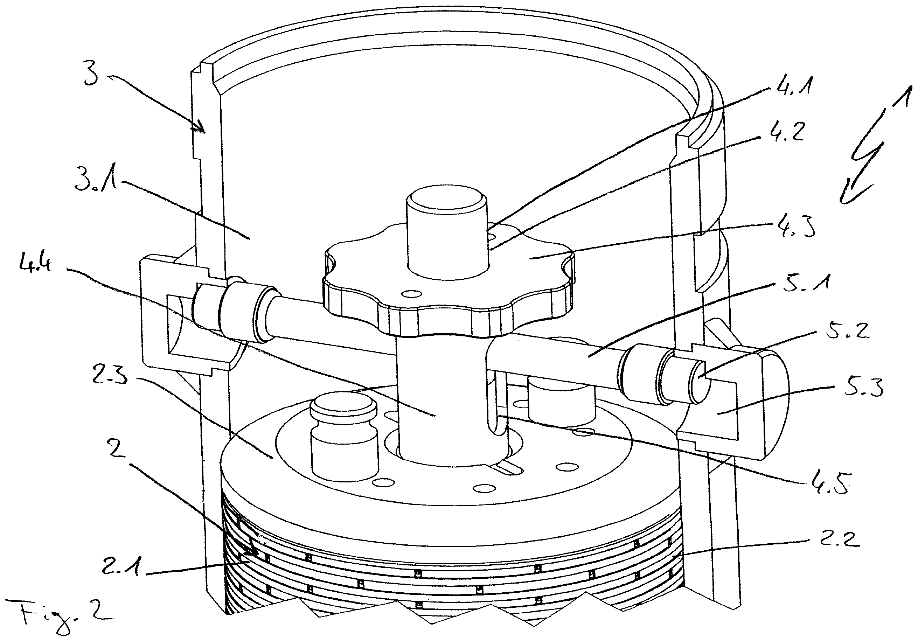

Die Figuren 1 und 2 zeigen eine Filteranlage 1 in einem Längsschnitt. Die Filteranlage 1 umfasst ein zylindrisches Filterplattenpaket 2, bestehend aus einer Mehrzahl an kreisrunden Filterplatten 2.1, zwischen je zwei Filterplatten 2.1 angeordnete Filterelemente 2.2 und eine an einer Stirnseite des Filterplattenpaketes 2 angebrachte Abdeckung 2.3.

Das Filterplattenpaket 2 ist von einem zylindrischen Gehäuse 3 umschlossen und von der äußeren Umgebung hermetisch abtrennbar.

Erfindungsgemäß kann das Gehäuse 3 eine Spann- und Stützeinrichtung 4, 5 aufnehmen, wobei in einem gespannten Zustand ein Aufschwemmen der einzelnen Filterplatten 2.1 mit den Filterelementen 2.2 während eines Filtrationsprozesses verhindert wird. Zudem wird eine definierbare Anpresskraft auf eine Abdeckung 2.3 aufgebracht.

Damit lässt sich eine Vorspannung herstellen, um die Filterelemente abzudichten. Zum Beispiel dichten zwei Filterplatten das eingeschlossene Filtermedium (Papier, Karton, Vlies, Gewebe) bei einem Plattenfiltereinsatz an der inneren und der äußeren Dichtfläche ab.

Bei der in Figur 1 und 2 gezeigten Filteranlage 1 setzten sich im Laufe der Zeit die Poren des Filterelements 2.2 mit Partikeln des Mediums zu, sodass der Durchsatz der Filteranlage 1 im Laufe der Zeit nachlässt. Dies bedeutet, dass die Filterelemente 2.2 nach einer gewissen Zeit gegen neue Filterelemente 2.2 ausgetauscht werden müssen. Dieser Austauschprozess wird mittels der Spann- und Stützvorrichtung 4, 5 ebenfalls verbessert.

Das zu filtrierende Medium nimmt durch das Filterplattenpaket 2 den folgenden Weg: Im Umfangsbereich befinden sich Einführöffnungen zum Einführen von zu filtrierendem Medium in den Hohlraum unterhalb einer jeden Filterplatte 2.1. Hier gelangt das Medium auf die Filterelemente 2.2, wobei unerwünschte Partikel zurückgehalten werden. Der Hohlraum ist gebildet durch Zusammenfügen zweier Filterplatten 2.1. Je nach Systemdruck, mit dem sich das Medium durch das Filterplattenpaket 2 bewegt, erzeugt dieser Druck ein Aufschwimmen - also eine Abstandsänderung - der einzelnen Filterplatten 2.1. Die Filterplatten 2.1 umfassen eine Vielzahl von Rillen. In einer Mehrzahl an Kanälen die sich zwischen einander benachbarten Gruppen von Rippensegmenten befinden, wird das Filtrat gesammelt und zu einer zentralen Bohrung geleitet, von wo aus es abgeführt wird.

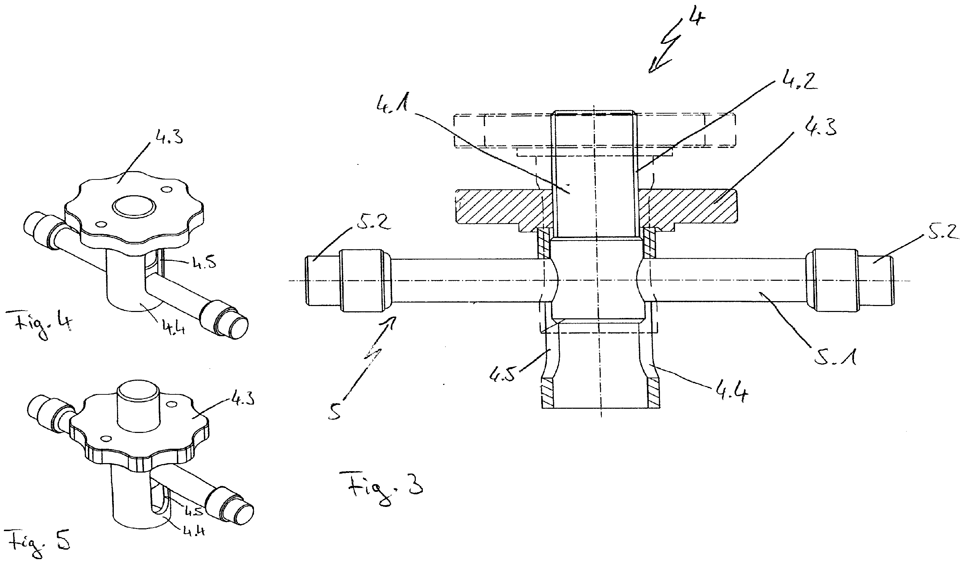

Die Figur 3 zeigt eine Spann- und Stützeinrichtung 4, 5 in einer Vorderansicht. Die Spanneinrichtung 4 umfasst dabei eine Gewindeeinheit 4.1 mit einer Gewindespindel 4.2, einer auf diese aufschraubbare Mutter 4.3 und eine Anpresshülse 4.4. Die Anpresshülse 4.4 umhüllt die Gewindespindel 4.2 wenigstens auf einem Teil deren Länge. Mit einem Ende liegt die Anpresshülse 4.4 an der Mutter 4.3 an, mit dem anderen Ende ist diese dem Filterplattenpaket 2 zugewandt. Wird eine Anpresskraft erzeugt, indem die Mutter 4.3 gedreht wird, liegt die Anpresshülse 4.4 an der Abdeckung 2.3 auf und leitet dadurch in axialer Richtung die Anpresskraft ein. Dadurch wird im Wesentlichen der Filtereinsatz in seiner Position fixiert und das Aufschwimmen der einzelnen Filterplatten 2.1 während des Filtrationsprozesses verhindert.

Die Stützeinrichtung 5 ist am Gehäuse 3 fixierbar und nimmt bei einem Verspannen des Filterplattenpaketes 2 die Anpresskraft auf. Dabei wird eine gewisse Federwirkung ausgeübt. Hierfür umfasst die Stützeinrichtung 5 einen Stab 5.1, der im Gehäuse 3 quer zur Anpressrichtung sowie diagonal fixierbar ist. Dessen beide Enden 5.2 sind je an einer Bohrung 3.1 der Wandung 3.2 des Gehäuses 3 gelagert. Der Stab 5.1 ist durch ein Langloch 4.5 in der Anpresshülse 4.4 hindurchgeführt und somit in axialer Richtung der Anpresshülse 4.4 verschiebbar. Dieser Zustand ist gut aus der Figur 2 ersichtlich.

Der Stab 5.1 ist vorzugsweise aus einem Metall gefertigt und an dessen Enden 5.2 mit Kunststoffkappen und in dem Bereich dazwischen hermetisch abgedichtet mit einer Kunststoffschicht umhüllt. Ebenso ist es vorteilhaft, die Mutter 4.3, die Gewindespindel 4.2 und die Anpresshülse 4.4 aus einem Kunststoff zu fertigen.

Eine Idee ist es, der Spanneinrichtung 4 eine Prüfeinrichtung anzuordnen, mit der ein Drehmoment der Mutter 4.3 während einem Spannvorgang der Spanneinrichtung 4 gemessen und/oder angezeigt wird. Ähnlich wie bei einem Drehmomentschlüssel soll dadurch angezeigt werden, wie fest die Mutter 4.3 und somit wie hoch die Spannkraft der Anpresshülse 4.4 ist. Diese Anwendung kann helfen, die chemikalienbeständigen Kunststoffteile vor Beschädigungen durch zu hohes Drehmoment zu schützen und eine geeignete Vorspannung für den ausgewählten Filtereinsatz sicherzustellen.

Die Figuren 4 und 5 zeigen die Spann- und Stützeinrichtung 4, 5 in einem gespannten und in einem gelösten Zustand. Man erkennt die unterschiedlichen Stellungen der Mutter 4.3 und der Anpresshülse 4.4 in dem jeweiligen Zustand.

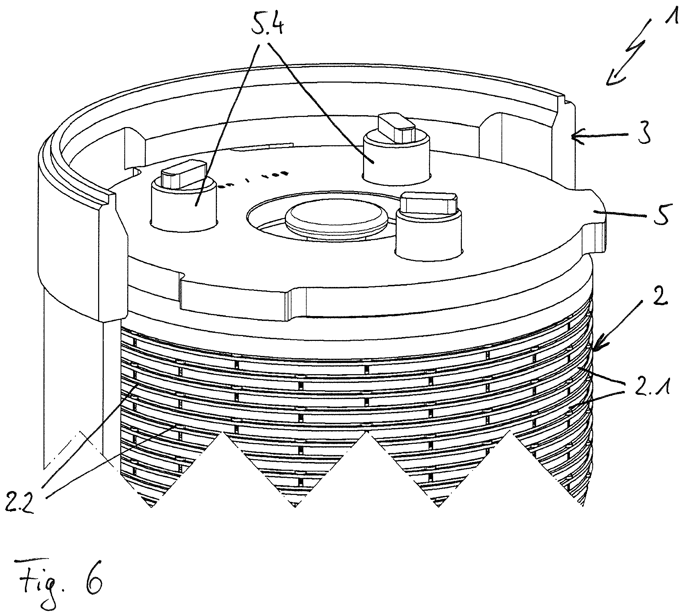

Eine alternative Ausführungsform der erfindungsgemäßen Filteranlage 1 ist aus der Figur 6 ersichtlich. Bei dieser Variante ist innerhalb des Gehäuses 3 eine Stützeinrichtung 5 angebracht, welche sich beispielsweise für einen Austausch der Filterelemente 2.2 oder des Filterplattenpaket 2 in eine Richtung schwenken lässt. Ebenso ist vorstellbar, dass diese Stützeinrichtung 5 auch ortsfest am Gehäuse 3 angebracht ist.

Die Stützeinrichtung (5) umfasst einen Spannstab (5.1), der in spannender Position quer zur Anpressrichtung verläuft und in dieser Position mit seinen beiden Enden an der Wand (3.1) des Filtergehäuses (3) gelagert und durch dessen beide einander gegenüberliegende Langlöcher (4.5) in der Spannhülse (4.4) hindurchgeführt ist, in denen der Spannstab (5.1) beim Pressvorgang in Pressrichtung verschiebbar ist.

Die Gewindespindel (4.2) ist durch Verdrehen der .Spannmutter (4.3) in axialer Richtung verschiebbar, um die Spannhülse (4.4) gegen das Filterplattenpaket (2) anzupressen.

Die alternative Ausführungsformen hätte den Vorteil, dass keine Metallteile innerhalb des Gehäuses hermetisch ummantelt werden müssen und so eine höhere Betriebssicherheit bei aggressiven Medien gewährleitet werden kann. Die drei Grundansprüche (Fixierung des Filterpakets in der korrekten Position, Abdichtung mittels Vorspannung und Aufnahme von Längenausdehnungen) können mit dieser alternativen Ausführungsform in ähnlichem Umfang dargestellt werden.

### Bezugszeichenliste

- 1: Filtervorrichtung
- 2: Filterplattenpaket
- 2.1: Filterplatten
- 2.2: Filterelement
- 2.3: Spannplatte
- 3: Filtergehäuse
- 3.1: Wandung
- 3.2: Bohrung
- 3.3: Innenfläche
- 4: Spann- und Stützvorrichtung
- 4.1: Ankerschraube mit Gewinde
- 4.2: Gewindespindel
- 4.3: Spannmutter
- 4.4: Spannhülse
- 4.5: Langloch
- 4.6: Schraube
- 5: horizontaler Spannstab
- 5.1: Spannstab
- 5.2: Endkappen

## Patentansprüche

1. Filteranlage (1) zum Filtern von Flüssigkeiten, umfassend die folgenden Merkmale:
1.1 ein zylindrisches Filtergehäuse (3) zur Aufnahme einer Spanneinrichtung (4) und eines Filterplattenpaketes (2);
1.2 die Spanneinrichtung (4) umfasst
- eine Ankerschraube (4.1) mit einer Gewindespindel (4.2);
- eine auf diese Gewindespindel aufschraubbare Spannmutter (4.3);
- eine Spannhülse (4.4), die die Gewindespindel (4.2) wenigstens auf einem Teil ihrer Längen umhüllt, mit ihrem einen Ende an der Spannmutter (4.3) anliegt und mit ihrem anderen Ende dem Filterplattenpaket (2) zugewandt ist und auf dieses eine Anpresskraft ausüben kann, wobei die Spannhülse zwei gegenüberliegende Langlöcher (4.5) aufweist;
1.3 eine Stützeinrichtung (5), die am Filtergehäuse (3) fixiert ist und die beim Verspannen des Filterplattenpaketes (2) die Anpresskraft aufnimmt;
1.4 wobei die Stützeinrichtung (5) einen Spannstab (5.1) umfasst, der in spannender Position quer zur Anpressrichtung verläuft und in dieser Position mit seinen beiden Enden an der Wand (3.1) des Filtergehäuses (3) gelagert und durch dessen beide einander gegenüberliegende Langlöcher (4.5) in der Spannhülse (4.4) hindurchgeführt ist, in denen der Spannstab (5.1) beim Pressvorgang in Pressrichtung verschiebbar ist;
1.5 wobei die Gewindespindel (4.2) durch Verdrehen der Spannmutter (4.3) in axialer Richtung verschiebbar ist, um die Spannhülse (4.4) gegen das Filterplattenpaket (2) anzupressen.

## Claims

1. Filter unit (1) for filtering liquids, comprising the following features:
1.1 a cylindrical filter housing (3) for accommodating a clamping device (4) and a filter plate pack (2);
1.2 the clamping device (4) comprises
- an anchor screw (4.1) with a threaded spindle (4.2);
- a clamping nut (4.3) which can be screwed onto this threaded spindle;
- a clamping sleeve (4.4) which surrounds the threaded spindle (4.2) over at least part of its length, rests with its one end against the clamping nut (4.3) and with its other end faces the filter plate pack (2) and can exert a clamping force on the latter, wherein the clamping sleeve has two opposing elongated holes (4.5);
1.3 a supporting device (5) which is fixed to the filter housing (3) and which absorbs the clamping pressure when the filter plate pack (2) is clamped;
1.4 wherein the supporting device (5) comprises a clamping rod (5.1) which, in the clamping position, extends transversely to the pressing-on direction and, in this position, is mounted with its two ends on the wall (3.1) of the filter housing (3) and through whose two mutually opposite elongated holes (4.5) in the clamping sleeve (4.4) the clamping rod (5.1) can be displaced in the pressing direction during the pressing operation;
1.5 wherein the threaded spindle (4.2) can be displaced in the axial direction by turning the clamping nut (4.3) in order to press the clamping sleeve (4.4) against the filter plate pack (2).

## Revendications

1. Installation de filtration (1) pour filtrer des liquides, comprenant les caractéristiques suivantes :
1.1 un boîtier de filtre cylindrique (3) destiné à recevoir un moyen de serrage (4) et un empilement de plaques filtrantes (2) ;
1.2 le moyen de serrage (4) comprenant :
- une vis d'ancrage (4.1) avec une broche filetée (4.2) ;
- un écrou de serrage (4.3) pouvant être vissé sur cette broche filetée ;
- une douille de serrage (4.4) qui enveloppe la broche filetée (4.2) au moins sur une partie de sa longueur, s'applique par l'une de ses extrémités sur l'écrou de serrage (4.3), est tournée par son autre extrémité vers l'empilement de plaques filtrantes (2) et peut exercer sur celui-ci une force de pression, la douille de serrage présentant deux trous oblongs opposés (4.5) ;
1.3 un moyen d'appui (5) qui est fixé au boîtier de filtre (3) et qui absorbe la force de pression lors du serrage de l'empilement de plaques filtrantes (2) ;
1.4 le moyen d'appui (5) comprenant une tige de serrage (5.1) qui, en position de serrage, s'étend transversalement à la direction de pressage et qui, dans cette position, est montée par ses deux extrémités sur la paroi (3.1) du boîtier de filtre (3) et passe dans la douille de serrage (4.4) à travers ses deux trous oblongs opposés (4.5), dans lesquels la tige de serrage (5.1) peut être déplacée dans la direction de pressage lors du processus de pressage ;
1.5 la tige filetée (4.2) pouvant être déplacée dans la direction axiale par une rotation de l'écrou de serrage (4.3) afin de presser la douille de serrage (4.4) contre l'empilement de plaques filtrantes (2).
